# EUROPÄISCHE PATENTSCHRIFT

(11) **EP 0 738 541 B1**
(45) Veröffentlichungstag und Bekanntmachung des Hinweises auf die Patenterteilung: **16.01.2002**
(21) Anmeldenummer: 96105755.1
(22) Anmeldetag: 12.04.1996
(51) Int. Cl.: B01L 9/06, G06K 17/00

(54) **Gefässhalter**
Holder for vessels
Support pour récipients

(30) Priorität: 19.04.1995 CH 112095
(43) Veröffentlichungstag der Anmeldung: 23.10.1996
(73) Patentinhaber: F. HOFFMANN-LA ROCHE AG, 4070 Basel (CH)
(72) Erfinder: Bühler, Jürg, 6023 Rothenburg (CH); Müller, Siegfried, 6344 Meierskappel (CH)
(74) Vertreter: AMMANN PATENTANWAELTE AG BERN

(56) Entgegenhaltungen:
- EP-A- 0 325 101
- EP-A- 0 356 250
- WO-A-83/00393
- FR-A- 2 307 259
- US-A- 4 727 033
- US-A- 4 877 134

## Beschreibung

Die Erfindung betrifft einen Gefässhalter gemäss dem Oberbegriff des Anspruchs 1. Ein Gefässhalter dieser Art ist in der europäischen Patentanmeldung EP 0325101 A1 beschrieben.

Bei modernen Analysengeräten ist es erwünscht, die Probe- und Reagenzgefässe im verfügbaren Raum möglichst eng nebeneinander anzuordnen, um eine möglichst wirtschaftliche Nutzung des Analysengeräts zu ermöglichen. Mit bisher bekannten Gefässhaltern für Analysengeräte kann dieses Ziel nur im begrenzten Umfang erzielt werden, weil die Gefässhalter Strichkode-Etiketten zur Kennzeichnung der Position der Gefässe auf zwei verschiedene Seiten des Gefässhalters tragen. Das Lesen der Strichkode-Etiketten auf den Gefässhaltern erfordert deshalb den Transport eines Strichkode-Lesegeräts zu den einzelnen Etiketten mit einer geeigneten Transporteinrichtung. Zwischen den Reihen von Gefässen muss daher Raum für den Transport eines Strichkode-Lesegeräts vorhanden sein.

Der Erfindung liegt daher die Aufgabe zugrunde, ein Gefässhalter zur Verfügung zu stellen, der eine kompaktere Anordnung der Gefässe im Analysengerät ermöglicht.

Erfindungsgemäss wird diese Aufgabe mit einem Gefässhalter gelöst, der durch die Merkmale im kennzeichnenden Teil des Patentanspruchs 1 gekennzeichnet ist.

Der wesentliche Vorteil des erfindungsgemässen Gefässhalters liegt darin, dass damit eine erheblich kompaktere Anordnung der Gefässe im Analysengerät erzielt wird, weil zwischen den Gefässhaltern kein Zwischenraum für den Transport eines Strichkode-Lesegeräts erforderlich ist.

Ein Ausführungsbeispiel der Erfindung wird im folgenden anhand der beiliegenden Zeichnungen beschrieben. Es zeigen:
- Fig.1: eine schematische Draufsicht der Anordnung von Gefässhaltern in einem Analysengerät.
- Fig. 2: eine schematische Vorderansicht der Anordnung gemäss Fig. 1.
- Fig. 3: eine perspektivische Vorderansicht eines der erfindungsgemässen, in Fig. 1 dargestellten Gefässhalter 21-26.
- Fig. 4: eine Vorderansicht des Gefässhalters gemäss Fig. 3.
- Fig. 5: eine perspektivische Ansicht eines Gefässhalter gemäss Fig. 3, bei dem die Kammer 51-1 bis 51-15 je ein Probegefäss 11 enthalten.
- Fig. 6: Ansichten von Mustern der Strichkode-Etiketten 44, 45, 47 und 48.
- Fig. 7: eine perspektivische Ansicht einer Trägerplatte, auf der die Gefässhalter gemäss Fig. 1 angeordnet werden.
- Fig. 8: eine perspektivische Ansicht der Trägerplatte 71 gemäss Fig. 7 und von einer Anordnung von Induktivsensoren und Hubmagneten, die unmittelbar unter dem vorderen Teil der Trägerplatte 71 angeordnet werden.
- Fig. 9: eine schematische Draufsicht einer Anordnung von Gefässhaltern unmittelbar vor der Einführung eines Gefässhalters in einen freien Platz.
- Fig. 10: eine schematische Draufsicht einer Anordnung von Gefässhaltern während der Einführung eines Gefässhalters in einen freien Platz.
- Fig. 11: eine perspektivische Schnittansicht eines Gefässhalters gemäss Fig. 3..
- Fig. 12: eine Draufsicht des Gefässhalters gemäss Fig. 3.
- Fig. 13: eine Unteransicht des Gefässhalters gemäss Fig. 3.
- Fig. 14: eine Seitenansicht von links des Gefässhalters gemäss Fig. 3.
- Fig. 15: eine Seitenansicht von rechts des Gefässhalters gemäss Fig. 3.
- Fig. 16: eine perspektivische Rückansicht eines der erfindungsgemässen, in Fig. 1 dargestellten Gefässhalter 21-26.

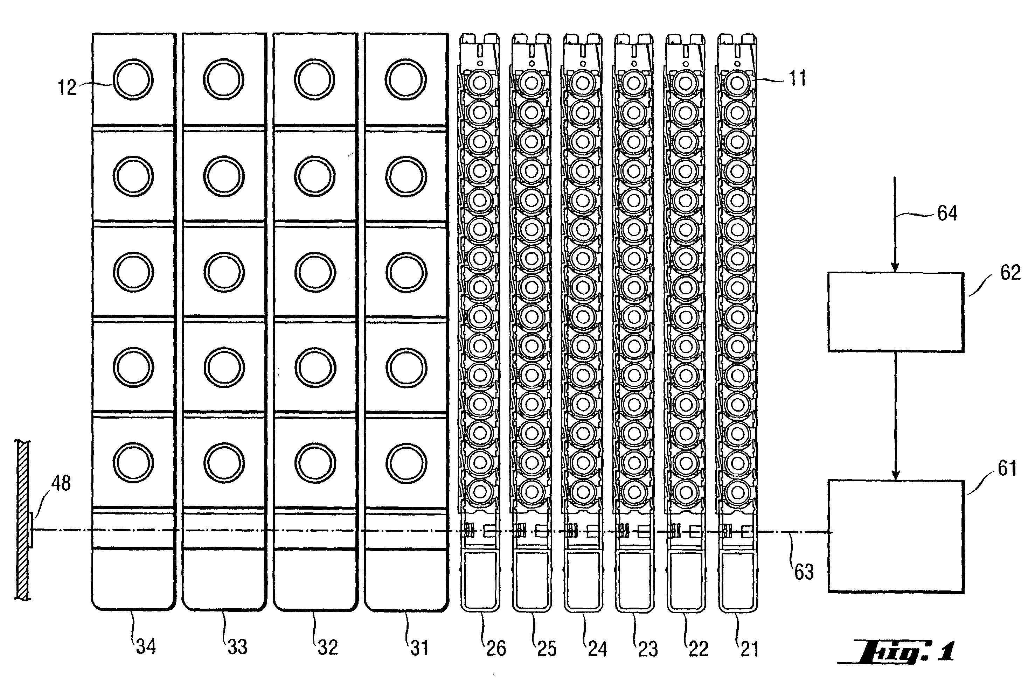

Fig. 1 zeigt eine Draufsicht eines Analysengerätes zur automatischen Durchführung von Analysen von flüssigen Proben. Wie in Fig. 1 gezeigt, werden in einem Analysengerät Gefässhalter 21 bis 26 für Probengefässe 11 und Gefässhalter 31 bis 34 für Reagenzgefässe 12 parallel nebeneinander angeordnet. In jedem der Gefässhalter wird eine Vielzahl von Gefässen der gleichen Art angeordnet, im Gefässhalter 21 werden z.B. Proben enthaltenden Gefässe 11 angeordnet.

Wie aus Fig. 1 ersichtlich, ist ein Strichkode-Lesegerät 61 im Analysengerät auf eine Seite der Anordnung von Gefässhaltern fest angeordnet. Mit dem Strichkode-Lesegerät 61 werden sämtliche Strichkode-Etiketten auf den Gefässhaltern 21 bis 26 , 31 bis 34 und auf den darin enthaltenen Gefässen gelesen, wobei der Lesevorgang jeweils während der Einführung eines Gefässhalters ins Analysengerät statt findet. Der Verlauf des zum Lesen der Strichkode-Etiketten verwendeten Lichtstrahl ist mit der gestrichelte Linie 63 angedeutet. Wenn dieser Lichtstrahl auf keine Etikette auf einem Gefässhalter oder Gefäss trifft, fällt er auf eine Etikette 48 auf, die auf einer festen Seitenwand des Analysengeräts angebracht ist, die sich ausserhalb der Anordnung von Gefässhaltern befindet. Die Etikette 48 wird zur Einstellung des Strichkode-Lesegeräts 61 gelesen.

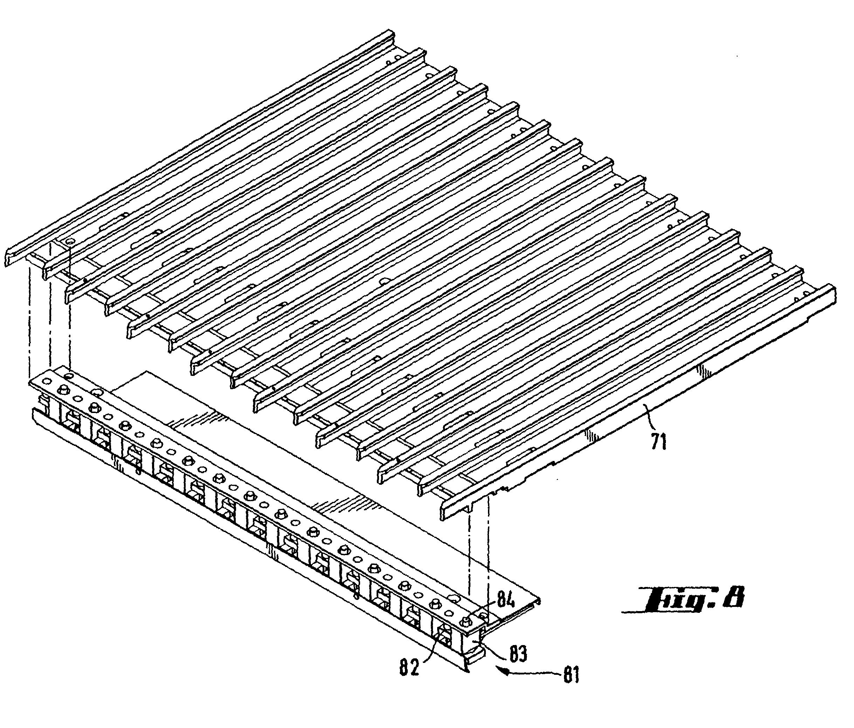

Das Analysengerät gemäss Fig.1 enthält ferner Mittel zur automatischen Einstellung des Fokussierbereichs des Strichkode-Lesegeräts in Funktion des Abstands zwischen dem Gefässhalter und dem Strichkode-Lesegerät. Dazu gehören in Fig. 8 dargestellte Mittel, welche die Position jedes Gefässhalters im Analysengerät erfassen und entsprechende elektronische Signale erzeugen und damit - wie in Fig. 1 dargestellt - über eine Leitung 64 und eine Steuerschaltung 62 eine geeignete Einstellung des Fokussierbereichs des Strichkode-Lesegeräts in Funktion des Abstands zwischen dem Gefässhalter und dem Strichkode-Lesegerät bewirken. Das Strichkode-Lesegerät kann auf diese Weise Strichkode-Etiketten korrekt lesen, die sich auf verschiedene Entfernungen des Strichkode-Lesegeräts befinden.

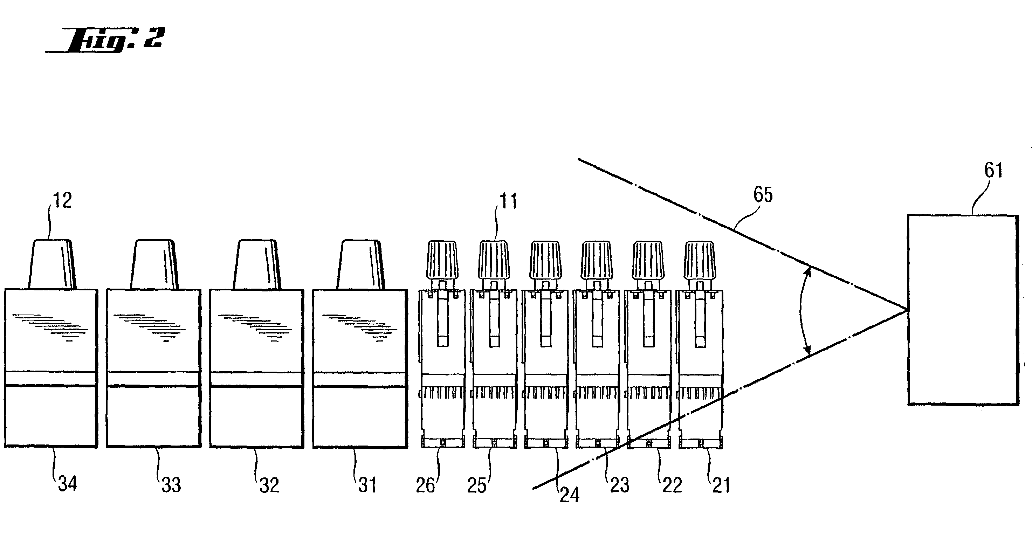

Fig. 2 zeigt schematisch die relative Anordnung der Gefässhalter 21 bis 26 und 31 bis 34 und des Strichkode-Lesegeräts 61 im Analysengerät gemäss Fig. 1. In Fig. 2 wird der vom Lesestrahls 63 beim Lesevorgang abgetastete Winkel 65 dargestellt.

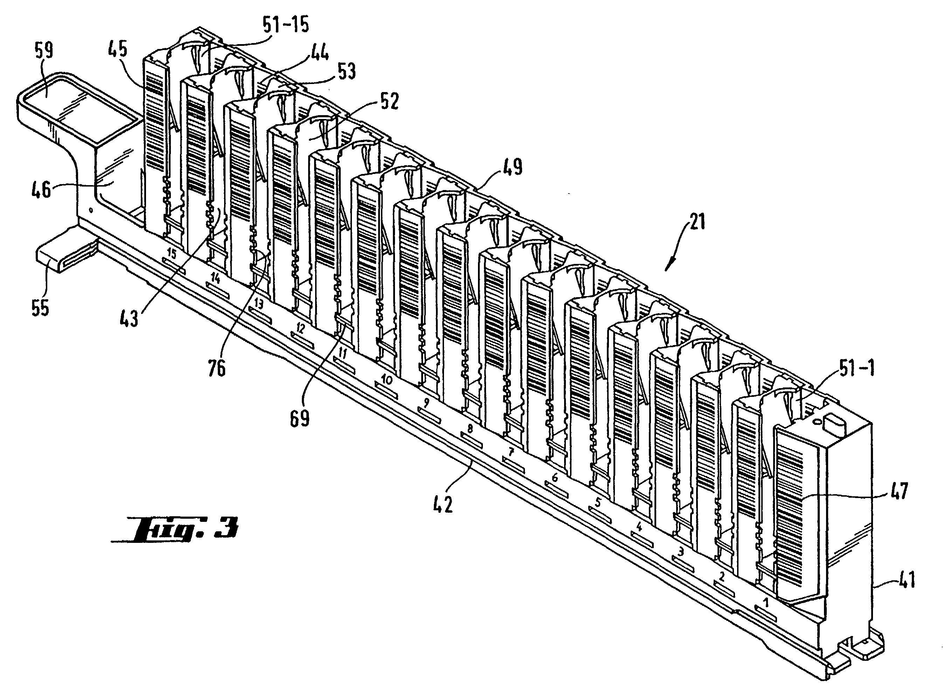

Fig. 3 zeigt eine perspektivische Ansicht eines der erfindungsgemässen, in Fig. 1 gezeigten Gefässhalter 21 bis 26 für Probengefässe 11, z.B. Gefässhalter 21. Der Gefässhalter 21 hat einen in einem Stück hergestellten länglichen Körper 41, der eine einzige geradlinige Reihe von identischen, länglichen Kammern 51-1 bis 51-15 zur Aufnahme von je einem Gefäss 11 enthält. Alle diese Kammer haben einen gemeinsamen Boden 42, in Bezug auf den sie senkrecht angeordnet sind. Benachbarte Kammer, z.B. 51-1 und 51-2 sind voneinander durch eine Trennwand 43 getrennt.

Jede der Kammer 51-1 bis 51-15 hat eine sich von oberen Teil einer Trennwand 43 nach innen erstreckende Zunge 52, die als Feder zur genauen Positionierung eines Gefässes 11 in der Kammer dient. Die Zunge 52 hat eine Halterung 53, die in passenden Oeffnungen der Trennwand 43 einsteckbar ist.

Jede der Kammer 51-1 bis 51-15 trägt auf der Innenfläche einer Seitenwand 49 eine erste Strichkode-Etikette 44, die zur Erfassung des Fehlens eines Gefässes in der Kammer dient. Jede der Kammer 51-1 bis 51-15 trägt auf der Aussenfläche einer Seitenwand eine zweite Strichkode-Etikette 45, die zur Erfassung der Position der Kammer im Gefässhalter dient. Auf dem Gefässhalter, der dem Benutzer geliefert wird, sind die Strichkode-Etiketten 44 und 45 aller Kammer an den dafür vorgesehenen Flächen geklebt.

Der Gefässhalter 21 trägt ferner an einem ersten Ende eine Strichkode-Etikette 47, die auf der Aussenfläche einer Seitenwand angebracht ist, die an der ersten Kammer 51-1 des Gefässhalters angrenzt. Die Strichkode-Etikette 47 dient zur Erfassung der Nummer des Gefässhalters 21. Der Gefässhalter 21 hat an seinem entgegengesetzten Ende eine Fläche 59, die parallel zum Boden des Halters angeordnet ist, und die zur Aufnahme einer Etikette mit der Nummer des Halters in der Form einer Zahl dient. Diese Etikette sowie die Etikette 47 werden getrennt vom Gefässhalter geliefert und vom Benutzer angebracht.

Die erste Strichkode-Etikette 44 und die zweite Strichkode-Etikette 45 aller Kammer 51-1 bis 51-15 und die Strichkode-Etikette 47 werden bei der Einführung des Gefässhalters ins Analysengerät von der selben Seite des Gefässhalters mit dem Strichkode-Lesegerät 61 gelesen.

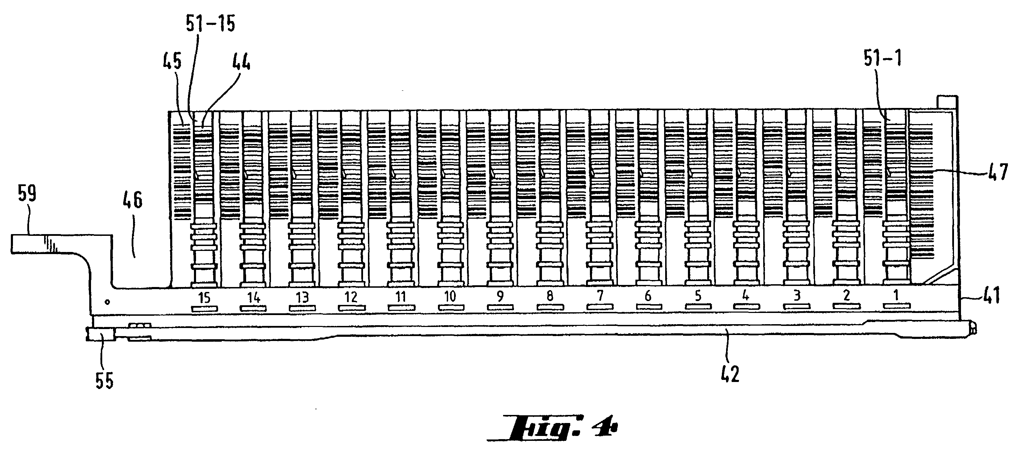

Fig. 4 zeigt eine Vorderansicht des Gefässhalters gemäss Fig. 3. Aus Fig. 4 sind alle Strichkode-Etiketten, 44, 45 und 47 auf dem Gefässhalter, sowie ein Fenster 46 ersichtlich, durch das der Lesestrahl des Strichkode-Lesegeräts 61 beim Lesevorgang verläuft.

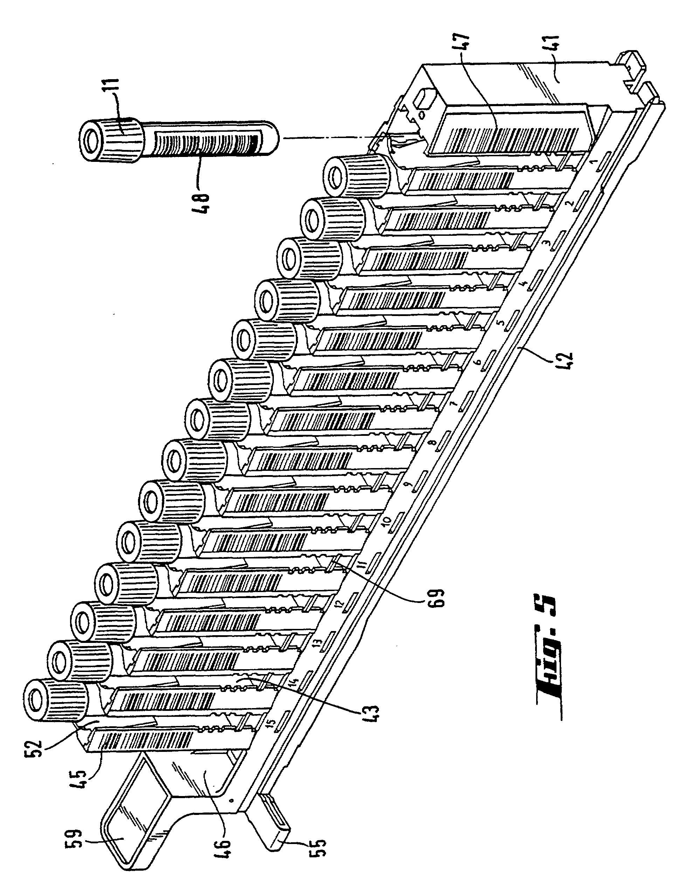

Fig. 5 zeigt einen Gefässhalter gemäss Fig. 3, bei dem die Kammer 51-1 bis 51-15 je ein Probengefäss 11 enthalten. Jedes Probengefäss ist auch mit einer Strichkode-Etikette 48 versehen. Jedes Probengefäss 11 wird in der Kammer des Gefässhalters so angeordnet, dass auch die auf ihm angebrachte Strichkode-Etikette mit dem Strichkode-Lesegerät 61 lesbar ist.

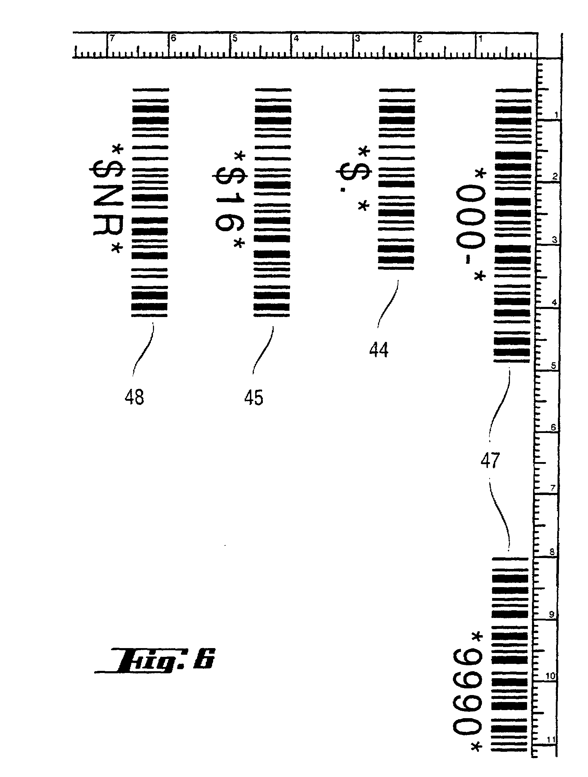

Fig. 6 zeigt Muster der Strichkode-Etiketten 44, 45, 47 und 48.

Die obige Beschreibung der Gefässhalter 21-26 für Probengefässe gilt im wesentlichen auch für die Gefässhalter 31-34 für Reagenzgefässe. Die Gefässhalter 31-34 unterscheiden sich von den Gefässhaltern 21-26 hauptsächlich durch die Anzahl Kammer pro Gefässhalter und durch die Abmessungen der Kammer.

Zur Vereinfachung der Darstellung werden in den nachstehend beschriebenen Figuren die Gefässhalter ohne die bei ihrer Benutzung im Analysengerät darin enthaltenen Gefässe dargestellt.

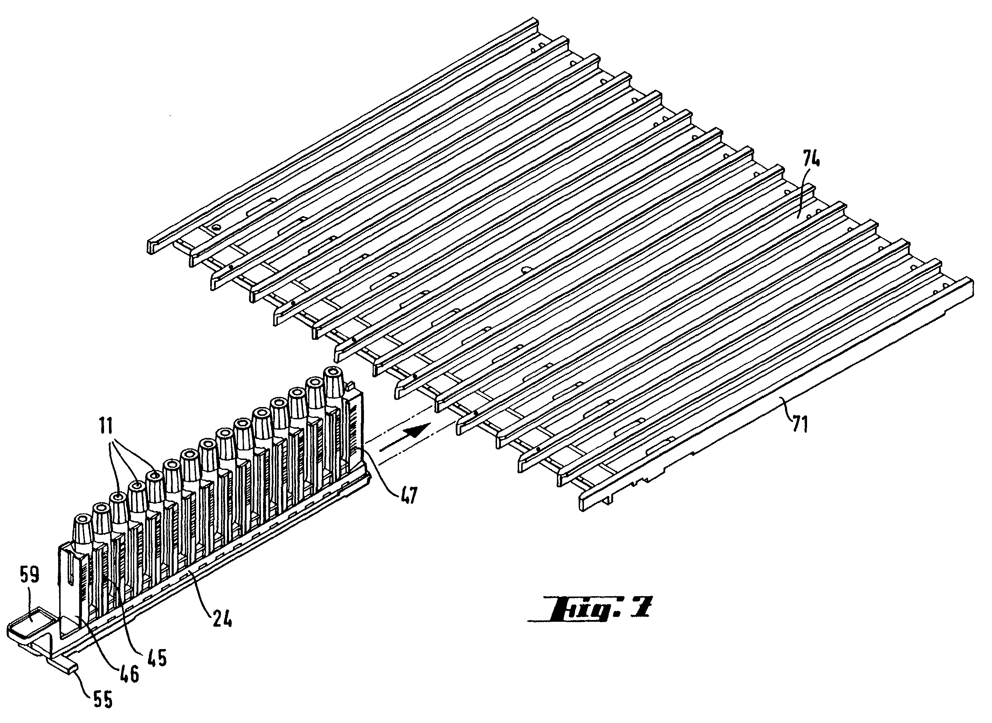

Im Analysengerät gemäss Fig. 1 werden die Gefässhalter in dazu passenden Bahnen einer in Fig. 1 nicht dargestellten Trägerplatte angeordnet. Wie in Fig. 7 angedeutet, wird jeder Gefässhalter 24 in eine freie Bahn 74 einer Trägerplatte 71 eingeschoben. Wie in der Explosionsansicht gemäss Fig. 8 dargestellt, befindet sich unter der Trägerplatte 71 eine Anordnung 81 von Induktivsensoren 82 und Hubmagneten 83, wobei pro Bahn ein Induktivsensor und ein Hubmagnet vorhanden ist. Wenn ein Gefässhalter 24 sich der Bahn 74 der Trägerplatte nähert, wird mit dem Induktivsensor 82 unterhalb der Bahn die Näherung eines Metallknopfs erfasst, der sich am Boden und in der Nähe der Spitze des Gefässhalters 24 befindet. Auf diese Weise wird die Position des Gefässhalters erfasst und damit ein entsprechendes elektrisches Signal erzeugt, das der Steuerschaltung 62 (in Fig. 1) zugeführt wird.

Mit den in Fig. 8 gezeigten Anordnung von Hubmagneten 83 und dazugehörigen Stiften 84 wird der Zugang zu jeder Bahn auf der Trägerplatte 71 für einen Gefässhalter selektiv geöffnet oder geschlossen. Der Zugang zu einer bestimmten Bahn ist in einem ersten Zustand des entsprechenden Hubmagnets 83 durch einen vom Hubmagnet bewegbaren Stift 84 gesperrt. Durch geeignete Steuerung des Hubmagnets kann dieser Stift 84 gezogen und dadurch den Zugang der Bahn für den Gefässhalter 24 geöffnet werden.

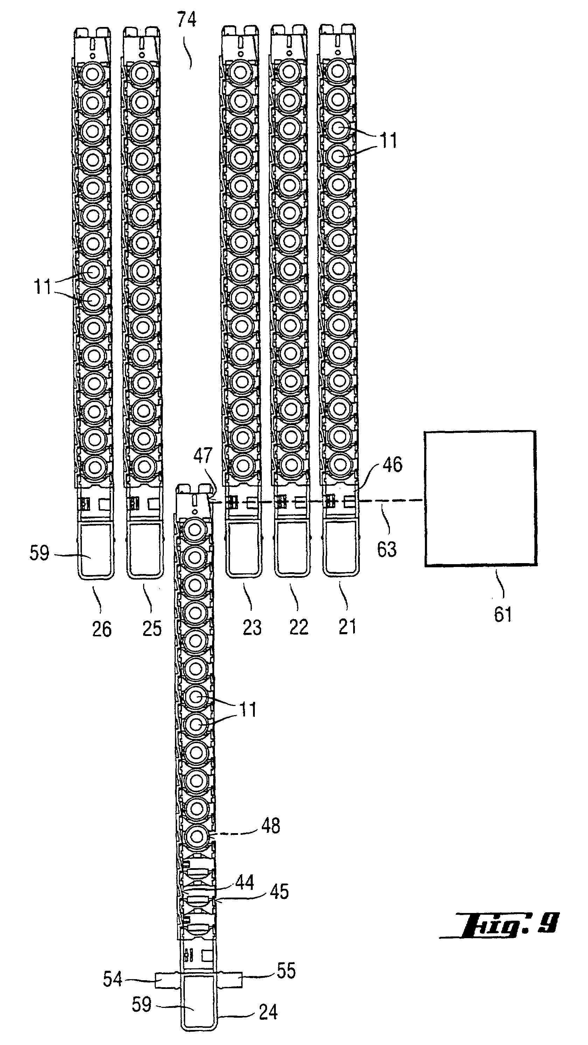

Die manuelle Einführung eines Gefässhalters 24 in einer freien Bahn 74 der Trägerplatte 71 gemäss Figuren 5 und 6 wird nachstehend anhand der Figuren 9 und 10 beschrieben.

Gemäss Fig. 9 befindet sich die freie Bahn 74 zwischen den Bahnen, die von Gefässhaltern 25 und 23 besetzt sind. Bei der Einführung des Gefässhalters 24 in der Bahn 74 stiess zunächst die Spitze des Gefässhalters 24 gegen den durch eine Oeffnung der Bahn 74 hervorragenden Stift 84 des Hubmagnets 83. Wenn dies eintritt, befindet sich der Gefässhalter 24 in der in Fig. 9 gezeigten Lage. In dieser Position wird die Strichkode-Etikette 47, welche die Identifikationsnummer des Gefässhalters 24 trägt, mit dem Strichkode-Lesegerät 61 gelesen. Dabei verläuft der Lichtstrahl 63 durch das Fenster 46 der Gefässhalter 21 bis 23. Nach der Durchführung dieses Lesevorgangs gibt das Strichkode-Lesegeräts 61 ein Steuersignal ab, das der Hubmagnet 83 aktiviert und dadurch den Stift 84 einzieht und somit die Einführung des Gefässhalters 24 in die Bahn 74 erlaubt.

Die Bewegung des Gefässhalters 24 während seiner manuellen Einführung in die Bahn 74 wird in Fig. 10 mit dem Pfeil 79 angedeutet. Während dieser Bewegung werden die Strichkode-Etiketten 45 aller Kammer 51-1 bis 51-15 sowie die Strichkode-Etiketten 48 der in diesen Kammer enthaltenen Probegefässe mit dem Strichkode-Lesegerät 61 gelesen. Wenn eine Kammer kein Probegefäss enthält wird die Strichkode-Etikette 44 der Kammer gelesen, die der leeren Zustand der Kammer angibt. Wenn alle Strichkode-Etiketten korrekt gelesen worden sind, gibt der Strichkode-Lesegerät 61 ein Steuersignal ab, das eine entsprechende Information an die Zentralsteuerung des Analysengeräts mitteilt. Konnte hingegen eine der Strichkode-Etiketten nicht korrekt gelesen werden, bleibt eine solche Mitteilung aus und der Benutzer wird durch eine geeignete Signalisierung aufgefordert, dass Gefässhalter 24 nochmals einzuführen, damit der Lesevorgang wiederholt werden kann.

Wenn Gefässhalter 24 seine vorbestimmte Position in der Bahn 74 eingenommen hat, wird dies mit der Induktivsensor 82 erfasst, der einen zweiten Metallknopf an einem Ende des Bodens des Gefässhalters 24 fühlt. Diese Erfassung bewirkt eine Verriegelung der Bahn 74 mittels des entsprechenden Hubmagnetes 83 und den dazugehörigen Stift 84, so dass der Gefässhalter 24 in dieser Bahn festgehalten wird, bis die Bahn 74 durch ein entsprechendes Steuersignal entriegelt wird, das am Ende der Bearbeitung der Proben im Gefässhalter 24 von der Zentralsteuerung des Analysengerätes erzeugt wird.

Die Abtastfrequenz des Strichkode-Lesegeräts wird so hoch gewählt wird, dass sie ein korrektes Lesen aller Strichkode-Etiketten auf einem Gefässhalter während dessen manuellen Einführung in das Analysengerät ermöglicht.

Die obige Beschreibung der Einführung des Gefässhalters 24 in einer entsprechenden Bahn der Trägerplatte 71 und des Lesens der Strichkode-Etiketten mit dem Strichkode-Lesegerät 61 gilt auch in Bezug auf die übrigen Gefässhalter und Gefässe im Analysengerät gemäss Fig.1.

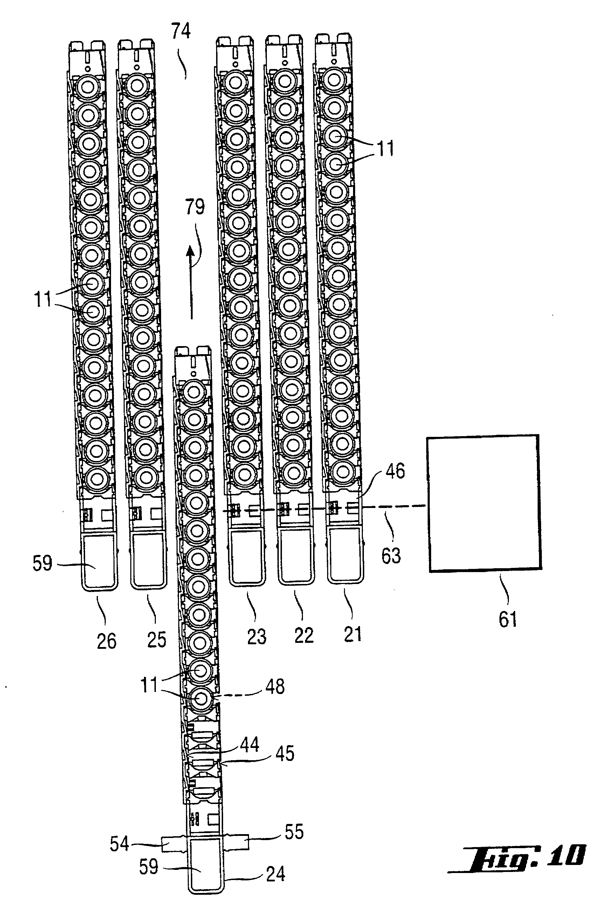

Weitere Einzelheiten des Gefässhalters gemäss Fig. 3 sind nachstehend anhand der Figuren 11-16 gezeigt.

Aus der Schnittansicht gemäss Fig. 11 sind insbesondere der gemeinsame Boden 42 der Kammer 51-1 bis 51-15 und die Trennwände zwischen benachbarten Kammern dargestellt.

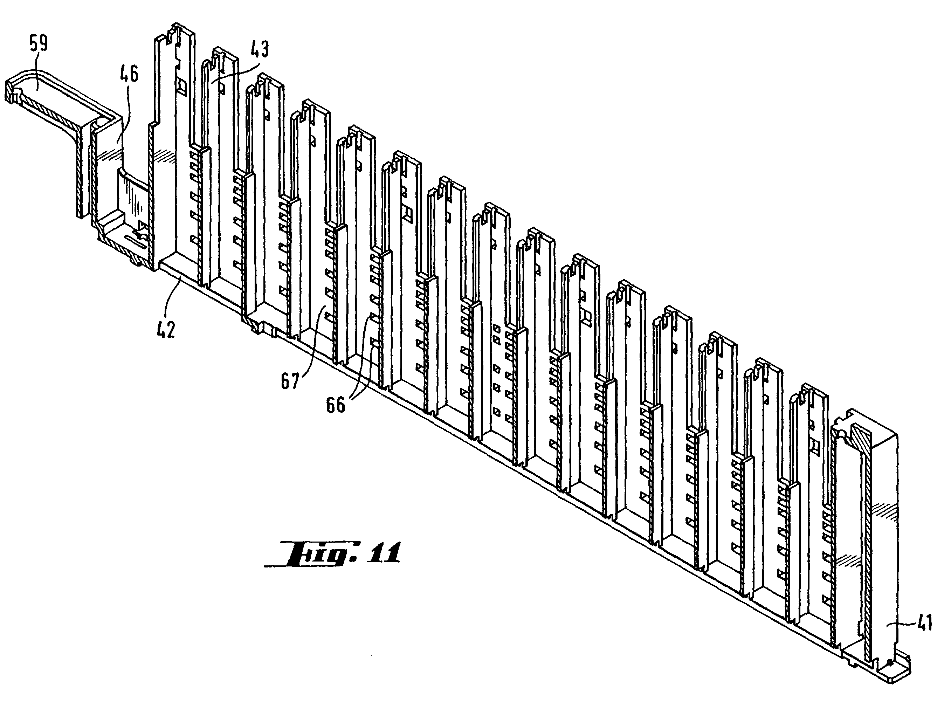

Fig. 12 zeigt eine Draufsicht des Gefässhalters gemäss Fig. 3. Es ist aus Fig. 11 ersichtlich, dass die Innenfläche, welche die erste Strichkode-Etikette 44 trägt, und die Aussenfläche, welche die zweite Strichkode-Etikette 45 trägt, in Bezug auf eine Ebene, die durch die Längsachse des Gefässhalters und die Längsachse einer der Kammer definiert ist, gleich angeordnet sind. In einer bevorzugten Ausführungsform des Gefässhalters sind die soeben erwähnten Innenfläche bzw. Aussenfläche parallel zu einander und bilden ein Winkel von ca. 10 Grad mit der Ebene, die durch die Längsachse des Halters und die Längsachse einer der Kammer definiert ist.

In einer bevorzugten Ausführungsform des Gefässhalters ist ferner die Innenfläche, welche die erste Strichkode-Etikette 44 trägt, ein Teil der Innenfläche einer gemeinsamen Seitenwand 49 aller Kammer 51-1 bis 51-15, wobei die Seitenwand 49 mit dem Körper des Halters trennbar verbunden ist.

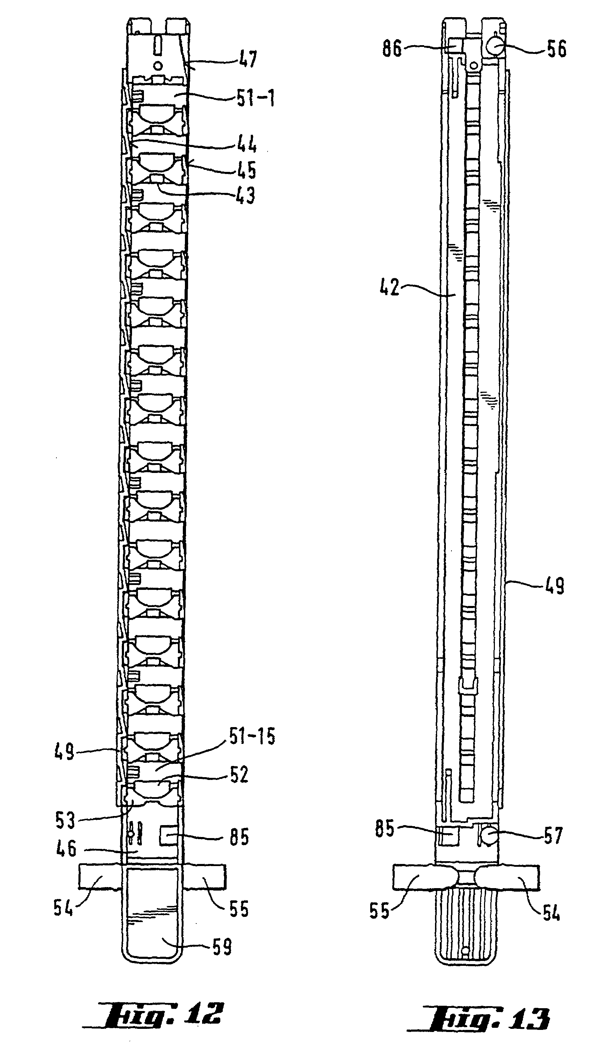

Fig. 13 zeigt eine Unteransicht des Gefässhalters gemäss Fig. 3.

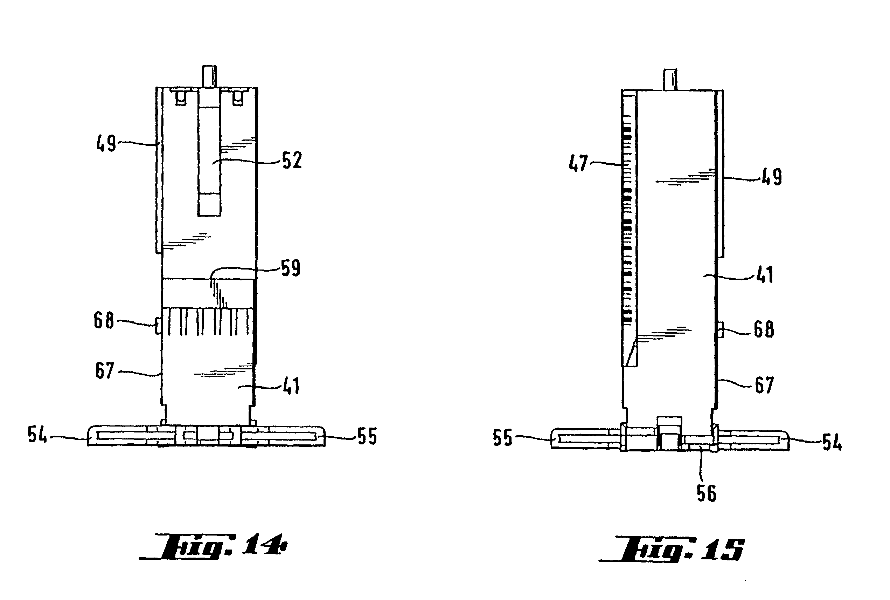

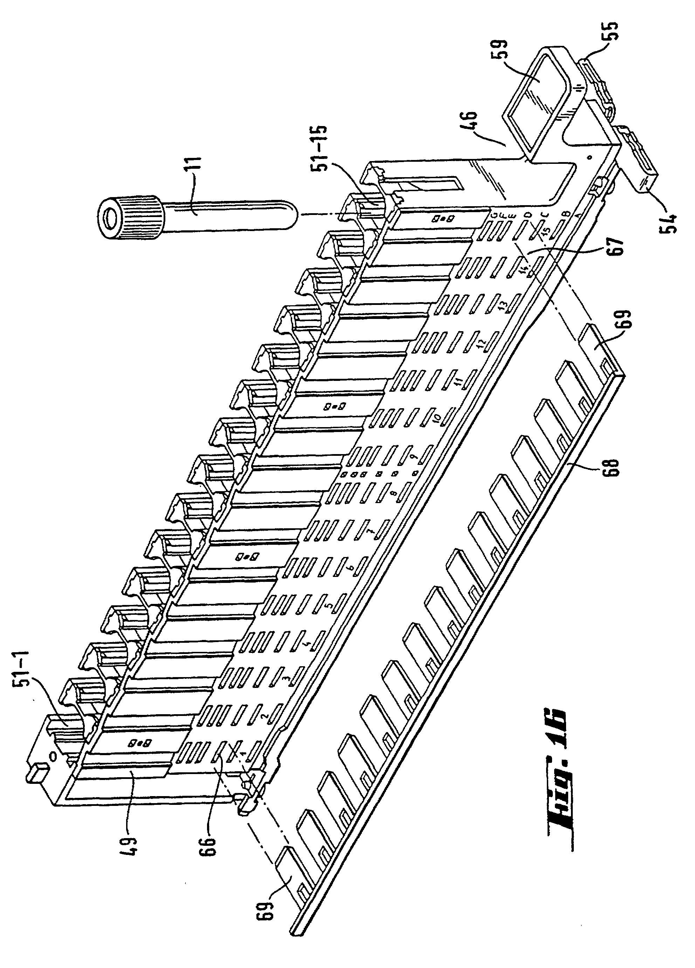

Fig. 14 zeigt eine Seitenansicht von links und Fig. 15 zeigt eine Seitenansicht von rechts des Gefässhalters gemäss Fig. 3.

Wie aus Figuren 12 bis 14 ersichtlich, hat der Gefässhalter gemäss Fig. 3 an einem Ende flache Stützen 54 und 55, deren untere Aussenfläche mit der unteren Aussenfläche des Bodens 42 des Gefässhalters koplanar sind. Jede der Stützen 54 und 55 wird durch eine Torsionfeder in seitlicher Lage gehalten. Bei der Einführung des Gefässhalters ins Analysengerät werden die Stützen 54 und 55 gegen die Kraft der Torsionfeder geklappt und nehmen eine zur Längsachse des Gefässhalters parallele Lage ein. Die Stützen 54 und 55 geben dem Gefässhalter eine erhöhte Stabilität gegen Umkippen, wenn der Gefässhalter vor seiner Einführung ins Analysengerät z.B. auf einem Tisch gelegt wird.

Wie in Figur 13 dargestellt, sind am Boden 42 einer bevorzugten Ausführungsform des Gefässhalters gemäss Fig. 3 Metallköpfe 56 und 57 befestigt, die mittels eines induktiven Sensors erfassbar sind.

Wie in Figur 13 dargestellt, sind am Boden 42 einer bevorzugten Ausführungsform des Gefässhalters gemäss Fig. 3 Oeffnungen 85 bzw. 86 vorhanden, die ein Festhalten des Gefässhalters auf der Trägerplatte 71 ermöglichen.

Fig. 16 zeigt eine perspektivische Rückansicht des Gefässhalters gemäss Fig. 3.

Wie in Figur 16 dargestellt, hat eine aller Kammer 51-1 bis 51-15 gemeinsame Seitenwand 67 waagerechte Reihen von schlitzförmigen Oeffnungen 66 in verschiedenen senkrechten Lagen in Bezug auf dem Boden des Halters. Flache von einer Leiste 68 kammartig getragene Zwischenboden 69 können durch diese schlitzförmigen Oeffnungen eingeschoben werden. Dies ermöglicht, die Tiefe der Kammer 51-1 bis 51-15 der Länge der verwendeten Gefässe 11 anzupassen. In einer bevorzugten Ausführungsform wird die Spitze jedes Zwischenbodens 69 in einer entsprechenden Oeffnung 76 der Seitenwand der Kammer angeordnet, die gegenüber der Seitenwand 67 liegt.

Im Rahmen der Erfindung kann jede der erwähnten Strichkode-Etiketten durch ein Aequivalent, z.B. durch einen entsprechenden Aufdruck auf eine Fläche des Gefässhalters, ersetzt werden.

## Patentansprüche

1. Gefässhalter, der in einem Analysengerät zur Aufnahme einer Vielzahl von Gefässen (11, 12) verwendet wird, und einen in einem Stück hergestellten länglichen Körper (41) hat, der eine einzige geradlinige Reihe von identischen, länglichen Kammern (51-1 bis 51-15) zur Aufnahme von je einem Gefäss (11, 12) enthält, wobei alle Kammer einen gemeinsamen Boden (42) haben, in Bezug auf den sie senkrecht angeordnet sind, wobei benachbarte Kammer voneinander durch eine Trennwand (43) getrennt sind, wobei jede Kammer zu einer Seitenwand geöffnet ist,
welcher Gefässhalter **dadurch gekennzeichnet ist, dass** jede der Kammer
(a) auf der Innenfläche einer ersten Seitenwand eine erste Strichkode-Etikette (44) trägt, die zur Erfassung des Fehlens eines Gefässes in der Kammer dient, und
(b) auf der Aussenfläche einer zweiten Seitenwand, zu der die Kammer geöffnet ist, eine zweite Strichkode-Etikette (45) trägt, die zur Erfassung der Position der Kammer im Gefässhalter dient,
wobei die erste und die zweite Strichkode-Etikette (44, 45) von der selben Seite des Gefässhalters mit einem Strichkode-Lesegerät (61) lesbar sind.

2. Gefässhalter gemäss Anspruch 1, **dadurch gekennzeichnet, dass** er an einem ersten Ende eine dritte Strichkode-Etikette (47) trägt, die auf der Aussenfläche einer Seitenwand angebracht ist, die an der ersten Kammer (51-1) des Gefässhalters angrenzt, wobei die dritte Strichkode-Etikette (47) zur Erfassung der Nummer des Gefässhalters dient und von der selben Seite des Gefässhalters wie die erste und die zweite Strichkode-Etikette (44, 45) mit einem Strichkode-Lesegerät (61) lesbar ist, und wobei der Gefässhalter an seinem zweiten Ende eine Fläche (59) aufweist, die parallel zum Boden des Gefässhalters angeordnet ist, und die zur Aufnahme einer Etikette mit der Nummer des Gefässhalters in der Form einer Zahl dient.

3. Gefässhalter gemäss Anspruch 2, **dadurch gekennzeichnet, dass** zwischen dem zweiten Ende des Gefässhalters und der letzten darin enthaltenen Kammer (51-15) einen freien Raum vorhanden ist, der beim Lesen der ersten, zweiten und dritten Strichkode-Etikette auf einem anderen Gefässhalter mit einem Strichkode-Lesegerät als Lesefenster (46) dient.

4. Gefässhalter gemäss Anspruch 1, **dadurch gekennzeichnet, dass** die Innenfläche, welche die erste Strichkode-Etikette (44) trägt, und die Aussenfläche, welche die zweite Strichkode-Etikette (45) trägt, in Bezug auf eine Ebene, die durch die Längsachse des Gefässhalters und die Längsachse einer der Kammer definiert ist, im wesentlich gleich angeordnet sind.

5. Gefässhalter gemäss Anspruch 1, **dadurch gekennzeichnet, dass** sowohl die Innenfläche, welche die erste Strichkode-Etikette (44) trägt, als auch die Aussenfläche, welche die zweite Strichkode-Etikette (45) trägt, mit der Ebene, die durch die Längsachse des Gefässhalters und die Längsachse einer der Kammer definiert ist, einen Spitzenwinkel von ca. 10 Grad bilden.

6. Gefässhalter gemäss Anspruch 1, **dadurch gekennzeichnet, dass** die Innenfläche, welche die erste Strichkode-Etikette (44) trägt, ein Teil der Innenfläche einer gemeinsamen Seitenwand (49) aller Kammer ist, wobei diese Seitenwand (49) mit einer Seitenwand (67) des Körpers (41) des Gefässhalters trennbar verbunden ist.

7. Gefässhalter gemäss Anspruch 1, **dadurch gekennzeichnet, dass** er an einem Ende flache Stützen (54, 55) aufweist, deren untere Aussenfläche mit der unteren Aussenfläche des Bodens (41) des Gefässhalters koplanar sind, und die durch je eine Feder in seitlicher Lage gehalten werden.

8. Gefässhalter gemäss Anspruch 1, **dadurch gekennzeichnet, dass** an beiden Enden des Bodens (41) des Gefässhalters metallische Glieder angeordnet sind, die mittels eines induktiven Sensors erfassbar sind.

9. Gefässhalter gemäss Anspruch 1, **dadurch gekennzeichnet, dass** an beiden Enden des Bodens des Gefässhalters Oeffnungen (85, 86) vorgesehen sind, die ein Festhalten des Gefässhalters ermöglichen.

10. Gefässhalter gemäss Anspruch 1, **dadurch gekennzeichnet, dass** eine gemeinsame Seitenwand (67) aller Kammer des Gefässhalters in verschiedenen senkrechten Lagen in Bezug auf dem Boden (41) des Gefässhalters Reihen von schlitzförmigen Oeffnungen (66) hat, und das flache, von einer Leiste (68) kammartig getragene Zwischenboden (69) durch diese schlitzförmigen Oeffnungen (66) eingeschoben werden können.

11. Gefässhalter gemäss Anspruch 1, **dadurch gekennzeichnet, dass** jede Kammer (51) eine sich von oberen Rand einer Trennwand nach innen erstreckende Zunge (52) hat, die als Feder zur genauen Positionierung eines Gefässes (11) in der Kammer dient.

## Claims

1. A vessel holder used in an analyser for receiving a number of vessels (11, 12), said vessel holder having an elongate body (41) made in one piece and containing a single straight row of identical elongate chambers (51-1 to 51-15) each for receiving one vessel (11, 12), all the chambers having a common base (42) with respect to which they are disposed perpendicularly, adjacent chambers being separated by a partition (43), and each chamber being open towards a side wall, which vessel holder is **characterised in that** each of the chambers (a) bears a first barcode label (44) on the inner surface of a first side wall, such label (44) serving for detection of the absence of a vessel in the chamber and (b) bears a second barcode label (45) on the outer surface of a second side wall to which the chamber is open, said second label (45) serving for detection of the position of the chamber in the vessel holder, the first and the second barcode labels (44, 45) being readable by a barcode reader (61) from one and the same side of the vessel holder.

2. A vessel holder according to claim 1,
**characterised in that** it bears at a first end a third barcode label (47) disposed on the outer surface of a side wall adjoining the first chamber (51-1) of the vessel holder, the third barcode label (47) serving for detection of the number of the vessel holder and being readable by a barcode reader (61) from the same side of the vessel holder as the first and the second barcode labels (44, 45) and the second end of the vessel holder having a surface (59) disposed parallel to the base of the vessel holder and serving to receive a label with the number of the vessel holder in the form of a digit or digits.

3. A vessel holder according to claim 2,
**characterised in that** a free space is present between the second end of the vessel holder and the last chamber (51-15) contained therein and serves as a reading window (46) during the reading of the first, second and third barcode labels on another vessel holder by a barcode reader.

4. A vessel holder according to claim 1,
**characterised in that** the inner surface bearing the first barcode label (44), and the outer surface bearing the second barcode label (45) are disposed in substantially the same way relative to a plane defined by the longitudinal axis of the vessel holder and the longitudinal axis of one of the chambers.

5. A vessel holder according to claim 1,
**characterised in that** both the inner surface bearing the first barcode label (44) and the outer surface bearing the second barcode label (45) form an apex angle of about 10° to the plane defined by the longitudinal axis of the vessel holder and the longitudinal axis of one of the chambers.

6. A vessel holder according to claim 1,
**characterised in that** the inner surface bearing the first barcode label (44) is part of the inner surface of a common side wall (49) of all the chambers, said side wall (49) being seperably connected to a side wall (67) of the body (41) of the vessel holder.

7. A vessel holder according to claim 1,
**characterised in that** one end has flat supports (54, 55), the bottom outer surface of which is coplanar with the bottom outer surface of the base (41) of the vessel holder, the supports each being held in a lateral position by a spring.

8. A vessel holder according to claim 1,
**characterised in that** metallic members detectable by means of an inductive sensor are disposed at both ends of the base (41) of the vessel holder.

9. A vessel holder according to claim 1,
**characterised in that** both ends of the base of the vessel holder are formed with openings (85, 86) for securing the vessel holder.

10. A vessel holder according to claim 1,
**characterised in that** a common side wall (67) of all the chambers of the vessel holder has rows of slot-shaped openings (66) at various vertical positions relative to the base (41) of the vessel holder, and the flat intermediate base (69) supported after the style of a comb by a strip (68) can be inserted through said slot-shaped openings (66).

11. A vessel holder according to claim 1,
**characterised in that** each chamber (51) has a tongue (52) extending inwards from the top edge of a partition and serving as a spring for exact positioning of a vessel (11) in the chamber.

## Revendications

1. Support pour récipients, utilisé dans un appareil d'analyse, pour recevoir une pluralité de récipients (11, 12), et comportant un corps (41) allongé, fabriqué d'une seule pièce, qui contient une rangée unique, en ligne droite, de chambres allongées (51-1 à 51-15) identiques, pour recevoir chacune un récipient (11, 12), la totalité des chambres ayant un fond (42) commun, en référence auquel elles sont disposées perpendiculairement, les chambres voisines étant séparées les unes des autres par une paroi de séparation (43), chaque chambre étant ouverte vers une paroi latérale,
le support pour récipients étant **caractérisé par le fait que** chacune des chambres
(a) porte, sur la face intérieure d'une première paroi latérale, une première étiquette à code à barres (44) servant à appréhender l'absence d'un récipient dans la chambre, et
(b) porte, sur la face extérieure d'une deuxième paroi latérale vers laquelle la chambre est ouverte, une deuxième étiquette à code à barres (45) servant à appréhender la position de la chambre dans le support pour récipients,
la première et la deuxième étiquettes à code à barres (44, 45) étant lisibles du même côté du support pour récipients, avec un appareil de lecture de code à barres (61).

2. Support pour récipients selon la revendication 1, **caractérisé en ce qu'**il porte, sur une première extrémité, une troisième étiquette à code à barres (47), placée sur la surface extérieure d'une paroi latérale limitrophe à la première chambre (51-1) du support pour récipients, la troisième étiquette à code à barres (47) servant à appréhender le numéro du support pour récipients et étant lisible depuis le même côté du support pour récipients que la première et la deuxième étiquettes à code à barres (44, 45), avec un appareil de lecture de code à barres (61), et le support pour récipients présentant, sur sa deuxième extrémité, une surface (59) parallèle au fond du support pour récipients et servant à recevoir une étiquette portant le numéro du support pour récipients, sous la forme d'un nombre.

3. Support pour récipients selon la revendication 2, **caractérisé en ce que**, entre la deuxième extrémité du support pour récipient et la dernière chambre (51-15) y étant contenue, est prévu un espace libre qui sert de fenêtre de lecture (46), lors de la lecture de la première, de la deuxième et de la troisième étiquettes à code à barres sur un autre support pour récipients avec un appareil de lecture de code à barres.

4. Support pour récipients selon la revendication 1, **caractérisé en ce que** la surface intérieure, qui porte la première étiquette à code à barres (34), et la surface extérieure, qui porte la deuxième étiquette à code à barres (45), sont disposées de façon sensiblement identique en référence à un plan qui est défini par l'axe longitudinal du support pour récipients et l'axe longitudinal d'une des chambres.

5. Support pour récipients selon la revendication 1, **caractérisé en ce que** tant la surface intérieure, qui porte la première étiquette à code à barres (44), qu'également la surface extérieure, qui porte la deuxième étiquette à code à barres (45), forment un angle aigu d'environ 10 degrés avec le plan défini par l'axe longitudinal du support pour récipients et l'axe longitudinal d'une des chambres.

6. Support pour récipients selon la revendication 1, **caractérisé en ce que** la surface intérieure, qui porte la première étiquette à code à barres (44), est une partie de la surface intérieure d'une paroi latérale (49) commune à toutes les chambres, cette paroi latérale (49) étant reliée de façon séparable à une paroi latérale (67) du corps (41) du support pour récipients.

7. Support pour récipients selon la revendication 1, **caractérisé en ce qu'**il présente à une extrémité des tubulures (54, 55) plates, dont la face extérieure inférieure est coplanaire envers la face extérieure inférieure du fond (41) du support pour récipients, et qui sont chacune maintenues en position latérale au moyen d'un ressort.

8. Support pour récipients selon la revendication 1, **caractérisé en ce qu'**aux deux extrémités du fond (41) du support pour récipients sont disposés des organes métalliques pouvant être détectés à l'aide d'un capteur inductif.

9. Support pour récipients selon la revendication 1, **caractérisé en ce qu'**aux deux extrémités du fond du support pour récipients, sont prévues des ouvertures (85, 86) permettant un maintien fixé du support pour récipients.

10. Support pour récipients selon la revendication 1, **caractérisé en ce qu'**une paroi latérale (67), commune à toutes les chambres du support pour récipients, comporte, en différentes positions, perpendiculairement en référence au fond (41) du support pour récipients, des rangées d'ouvertures (66) en forme de fente et **en ce que** des fonds intermédiaires (69) plats, portés à la façon des dents d'un peigne par une bande (68), peuvent être insérés à travers ces ouvertures (66) en forme de fente.

11. Support pour récipients selon la revendication 1, **caractérisé en ce que** chaque chambre (51) comporte une languette (52) qui s'étend du bord supérieur d'une paroi de séparation vers l'intérieur et sert de languette pour permettre un positionnement précis d'un récipient (11) dans la chambre.
